# EUROPEAN PATENT APPLICATION

(11) **EP 4 488 013 A1**
(43) Date of publication of application: **08.01.2025**
(21) Application number: 24275070.1
(22) Date of filing: 19.06.2024
(51) Int. Cl.: B25J 9/16

(54) **COLLISION DETECTION METHOD AND COLLISION DETECTION SYSTEM**

(30) Priority: 04.07.2023 JP 2023110187
(71) Applicant: Yushin Precision Equipment Co. , Ltd., Kyoto (JP)
(72) Inventor: TANAKA, Shogo, Kyoto (JP); KIMURA, Yusei, Kyoto (JP)
(74) Representative: Wilson Gunn

(57) **Abstract**

It is to provide a collision detection method and a collision detection system for being able to substantially eliminate the effects of a noise and a sudden acceleration / deceleration of a robot without using an electric filter or a timer, and to detect an "unexpected collision" earlier than conventional technologies. It is to compare a calculated value P with a predetermined threshold value Th0 within a predetermined period of time just after the unexpected collision occurs, the calculated value P being obtained by inputting into a predetermined multiplication formula P = Q x X a first parameter having a correlation with a torque of a motor (9) and a second parameter having a correlation with the torque of the motor (9), which is different from the first parameter. It is to determine that the unexpected collision has occurred when the calculated value exceeds the threshold value.

## Description

### TECHNICAL FIELD

The present invention relates to a collision detection method and a collision detection system for detecting an unexpected collision that is occurred when a movable portion has unexpectedly collided with a collided object in a mechanical apparatus including the movable portion supported by a support portion whose position is changed by a motor as a drive source.

### BACKGROUND ART

If an arm or the like of an industrial robot unintentionally (or unexpectedly) collides with an obstacle such as peripheral equipment, it is possible that a peripheral equipment or the robot itself would be damaged. Therefore, conventionally, technologies have been proposed to detect a collision between the robot and the obstacle at an early stage and to automatically stop the robot when the collision occurs.

For example, Japanese Unexamined Patent Application Publication No. 1989-230107 (Patent Document 1) discloses the invention including the steps for detecting a torque command value given to a servo motor at a predetermined cycle as a parameter indicating an operation state of a robot, and for determining that the robot has collided with the object when a difference between the torque command value detected in the previous cycle and the torque command value detected in the current cycle is equal to or exceeds a predetermined value, and for stopping the rotation of the servo motor due to the determination.

### SUMMARY OF INVENTION

### TECHNICAL PROBLEM

However, since an electrical noise is generated in sensors for detecting a parameter used for calculating variations of operation state of a robot and servo amplifiers for the robot, the operation state quantity changes significantly. In addition, the operation state quantity may change significantly due to mechanical characteristics (mechanical noise characteristics) caused by a gear engagement or the like or sudden acceleration / deceleration of the robot (initial inching movement during manual operation or the like). Accordingly, if a predetermined value (threshold value) for detecting the change of the operation state quantity is set low to speed up collision detection, the large change in the operating state quantity above is erroneously detected as the "unexpected collision" and then the robot comes into an emergency stop. Even a minor collision may cause performance deterioration or an accident depending on a type of robot. Therefore, in case that the robot comes into an emergency stop, it is required to take measures such as inspection each time and may disturb production planning.

In order to avoid the above-mentioned problem, it is conceivable to set a higher predetermined value (threshold value) in consideration of the noise. As the result, the detection of the unexpected collision may be delayed.

In addition, it may be conceivable to use an electric filter or a timer for eliminating the effects of noise and sudden acceleration / deceleration of the motor, but it may cause a time delay to use the electric filter or the timer and then it would be the reason to cause the delayed detection of the "unexpected collision."

An object of the present invention is to provide a collision detection method and a collision detection system for being able to substantially eliminate the effects of noise and the effects of sudden acceleration / deceleration of the motor without using an electric filter or a timer, and to detect an "unexpected collision" earlier than conventional technologies.

### SOLUTION TO PROBLEM

The present invention relates to a collision detection method for detecting an unexpected collision that is occurred when a movable portion has unexpectedly collided with a collided object in a mechanical apparatus including the movable portion supported by a support portion whose position is changed by a motor as a drive source. The collision detection method of the present invention includes a step of comparing a calculated value with a predetermined threshold value within a predetermined period of time just after the collision occurs, the calculated value being obtained by inputting into a predetermined multiplication formula a first parameter having a correlation with a torque of the motor and a second parameter having a correlation with the torque of the motor, which is different from the first parameter, and a step of determining that the unexpected collision has occurred when the calculated value exceeds the threshold value.

The first parameter and the second parameter are parameters each having a correlation with the torque of the motor within the predetermined period of time just after the collision occurs. Here, the "predetermined period of time just after the collision occurs" means a period of time within a period of time in which each of the first parameter and the second parameter has a correlation with the torque of the motor. Some parameters lose their correlation with the torque after the predetermined period of time immediately after the collision occurs, while others continue to have the correlation with the torque.

The first parameter and the second parameter within the predetermined period of time just after the collision occurs have similar increasing / decreasing trends in the values of the parameters over time. On the other hand, the noise components included in the first parameter and the second parameter not only has no correlation with the torque of the motor before or after the collision, but also no approximation in its tendency to the increase or decrease over time. Accordingly, the calculated value obtained by inputting into a predetermined multiplication formula the first parameter and the second parameter within the period of time just after the unexpected collision occurs (the predetermined period of time just after) becomes the significant increased value by the multiplication, because both the first parameter and the second parameter have correlations with the torque of the motor just after the collision occurs and have similar increasing / decreasing trends in the values of the parameters over time. On the other hand, the calculated noise does not become the significant increased value even by the multiplication, because the noise in the parameters has no correlation with the torque of the motor, and has no correlation each other, and has no approximation in its tendency to the increase or decrease over time. Therefore, according to the present invention, the false detections due to the presence of the noise can be prevented, comparing to the conventional technologies that compared one parameter with the threshold value. Furthermore, it is possible to earlier determine that the unexpected collision has occurred by comparing a larger calculated value with the predetermined threshold value, the larger calculated value being obtained by inputting into the multiplication formula the first parameter and the second parameter, by distinguishing a collision within the predicted range (a collision which naturally occurs in the operation process).

At least one of the first parameter and the second parameter which have a value of 1 (one) or less, is converted to a reciprocal of the parameter and the reciprocal of the parameter is inputted into the multiplication formula to obtain the calculated value. This is because when multiplied by a value of 1 (one) or less, the calculated value does not increase, but decreases.

The first parameter is a parameter related to the torque fed back to a drive unit of the motor, and the second parameter is a parameter related to a positioning deviation between a positioning command value given to the drive unit of the motor and a detecting position obtained by detecting a position of the movable portion. Since the trend of changes for the above-mentioned two parameters within the predetermined period of time just after the collision occurs is approximately similar, the calculated value is larger than a calculated value of one parameter for the conventional technologies. It goes without saying that the parameters include the torque of the motor itself.

The method of the present invention can be used to various mechanical apparatuses. The mechanical apparatus may be an apparatus for taking out a molded product, the movable portion may be a take-out head of the apparatus for taking out a molded product, and the support portion may be a support arm supporting the take-out head. In the above-described case, the threshold value may be a value being larger than the calculated value obtained by a collision allowed in a teaching work for setting an operation step (a collision within the predicted range) for taking out a molded product by the take-out head. In this way, it will not detect an allowed collision (a collision within the predicted range) occurred during the teaching work which sets the operation process as an unexpected collision that could damage the take-out head, the molded product, etc.

For example, the multiplication formula may be P = Q x X, when the calculated value is P, the first parameter is Q and the second parameter is X. The multiplication formula is the simplest formula, and is easy to calculate.

The collision detection system implementing the method of the present invention is configured that a collision detection system for detecting an unexpected collision that is occurred when a movable portion has unexpectedly collided with a collided object in a mechanical apparatus including the movable portion supported by a support portion whose position is changed by a motor as a drive source comprises a first parameter acquisition section, a second parameter acquisition section, a calculation section and a determination section. The first parameter acquisition section acquires a first parameter having a correlation with a torque of the motor within a predetermined period of time just after the collision occurs. The second parameter acquisition section acquires a second parameter having a correlation with the torque of the motor and being different from the first parameter within the predetermined period of time just after the collision occurs. The calculation section obtains a calculated value by inputting into a predetermined multiplication formula both the first parameter and the second parameter. The determination section compares the calculated value with a predetermined threshold value, and determines the unexpected collision has occurred when the calculated value exceeds the threshold value.

The system of the present invention can be used to various mechanical apparatuses. The mechanical apparatus may be an apparatus for taking out a molded product, the movable portion may be a take-out head of the apparatus for taking out a molded product, and the support portion may be a support arm supporting the take-out head. In the above-described case, the threshold value may be a value being larger than the calculated value obtained by a collision allowed in a teaching work for setting an operation step (a collision within the predicted range) for taking out a molded product by the take-out head. In this way, it will not detect an allowed collision (a collision within the predicted range) occurred during the teaching work which sets the operation process as an unexpected collision that could damage the take-out head, the molded product, etc.

### BRIEF DESCRIPTION OF DRAWINGS

Fig. 1 is a block diagram illustrating a schematic configuration of an apparatus for taking out a molded product as a mechanical apparatus in which a collision detection system implementing the collision detection method of the present invention has applied to detect a collision of a take-out head.
Fig. 2 is a diagram illustrating an example of a feedback loop within a feedback control portion for a motor driving the vertical frame.
Fig. 3 is a diagram illustrating an example of a state for the change over time consisting of the torque value Q as a first parameter, the motor detection velocity V, and the position deviation X as a second parameter when an unexpected collision has occurred after starting a teaching work in the apparatus for taking out a molded product.
Fig. 4 is a correlation diagram illustrating for viewing the correlation for the changes in the waveforms between the torque command value Q and the position deviation X illustrated in Fig. 3.
Fig. 5 is a diagram illustrating a state for the change over time in P = Q x X and the first parameter Q.

### DESCRIPTION OF EMBODIMENTS

Hereinafter, an example of an embodiment of the present invention will be described in detail with reference to the drawings.

### Collision detection system configuration

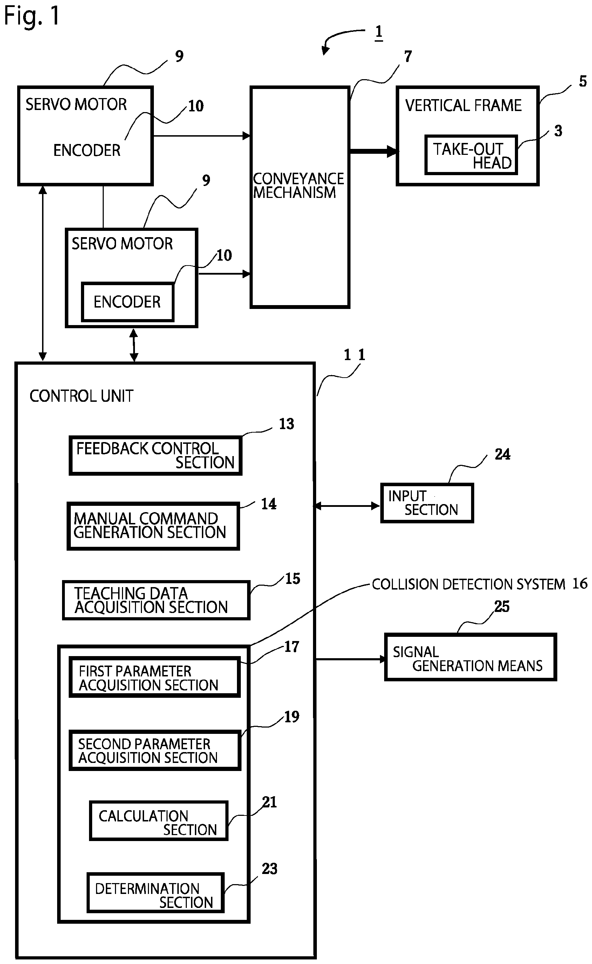

Fig. 1 is a block diagram illustrating a schematic configuration of an apparatus for taking out a molded product 1 as a mechanical apparatus in which a collision detection system implementing a collision detection method of the present invention has applied to detect a collision of a take-out head 3. In the apparatus for taking out a molded product 1, an unpredicted "Unexpected collision" may often occur in a teaching work for setting operation steps for taking out a molded product by the take-out head 3 mounted on a vertical frame 5. "Unexpected collision" is a collision in case that the take-out head 3 comes into contact with the mold or other peripheral objects by incorrect operation, and does not include a slight collision or pressing which is naturally occurs during the take-out operation.

In this embodiment, a plurality of servo motors 9, each with an encoder 10 are used as drive sources for a conveyance mechanism 7. A control unit 11 controlling the plurality of servo motors 9, includes a feedback control section 13 having feedback loop sections for the servo motors 9. Each of feedback loop sections obtains a deviation between position information detected by the encoder 10 and a position command and a deviation between velocity information detected by the encoder 10 and a velocity command, and then conducts feedback controls for both position and velocity of a drive shaft of the servo motor 9 based on the deviations.

The control unit 11 includes a manual command generation section 14 generating a manual command when manual controlling for the feedback control section 13 in a servo system by an input section 24, a teaching data acquisition section 15 memorizing the teaching data obtained by commands outputted from the manual command generation section 14 in the teaching work and a collision detection system 16. The apparatus for taking out a molded product in the present embodiment conducts the teaching work by supplying an operation command to the servo motor 9 by the input section 24, and records the teaching data into the teaching data acquisition section 15. Note that the input section 24 is operated for generating an evacuation operation command when an evacuation operation is conducted after a collision occurring. In addition, the present embodiment is provided with a signal generation means 25 generating an alarm signal when the collision detection system 16 detects a collision.

The collision detection system 16 includes a first parameter acquisition section 17, a second parameter acquisition section 19, a calculation section 21 and a determination section 23 in order to detect that the take-out head 3 (a movable portion) collides a collided object (for example, a die etc.). The collision detection system 16 is provided corresponding to the servo motor 9 to drive the vertical frame 5 on which the take-out head 3 mounted. Note that the elements constituting the collision detection system will be explained later.

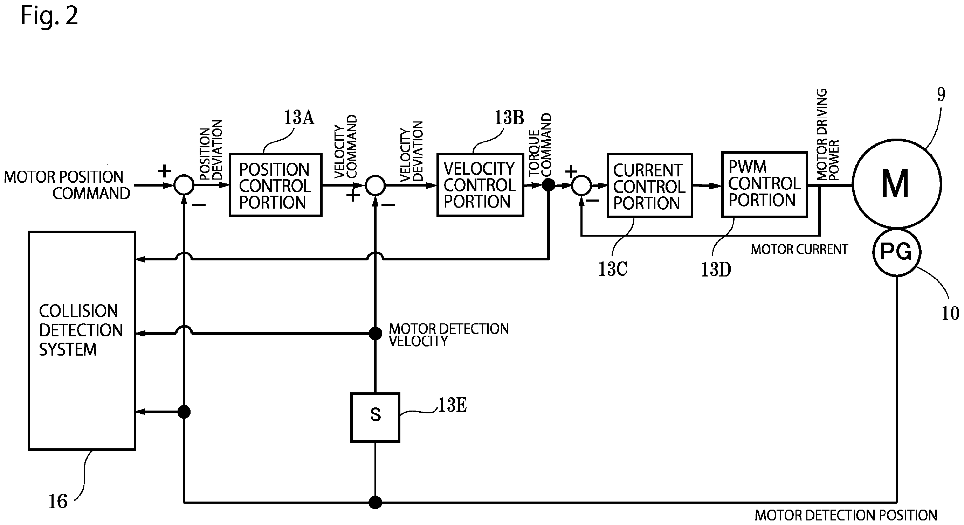

Fig.2 illustrates an example of a feedback loop within the feedback control section 13 for a motor driving the vertical frame 5. The feedback loop conducts a dual loop process of a position control feedback loop and a velocity control feedback loop. In the dual loop process, a deviation between a motor positioning command and a detection position of motor outputted from the encoder 10 is determined as a position deviation, and a position control portion 13A generates a velocity command based on the position deviation. Further, a deviation between the velocity command and a detection velocity of motor outputted from an output velocity detecting portion 13E is determined as a velocity deviation. A velocity control portion 13B generates a motor torque command based on the velocity deviation. Note that the detection velocity of motor may be calculated by first-order time differentiation of the detection position of motor using a differential operator in the output velocity detecting portion 13E. Then, a PWM control portion 13D drives the servo motor 9 by supplying driving power based on the motor torque command through a current control portion 13C.

The first parameter acquisition section 17 configured in the collision detection system 16 acquires the first parameter that has a correlation with the torque of the motor within a predetermined period of time immediately after the collision occurs. In the present embodiment, the torque command outputted from the velocity control portion 13B within the feedback loop illustrated in Fig. 2 is generated including feedback information of the detection velocity of motor which has been fed back. Therefore, the first parameter acquisition section 17 acquires the torque command as the first parameter having the correlation with the torque of the motor within the predetermined period of time just after the collision occurs. Note that it goes without saying that the first parameter acquisition section 17 may always acquire the torque command as the first parameter regardless of whether or not a generation of the correlation.

In addition, the second parameter acquisition section 19 configured in the collision detection system 16 acquires the second parameter having a correlation with the torque of the motor and being different from the first parameter within a predetermined period of time just after the collision occurs. The second parameter acquisition section 19 of the present embodiment acquires, as the second parameter, a deviation between the position command value supplying to the position control portion 13A which is a drive portion of the motor and the detection position of motor (corresponding to the detection position of the take-out head) which has been fed back. Note that the deviation has the correlation with the torque within a predetermined period of time just after the collision occurs, but no longer have the correlation with the torque after passing the predetermined period of time. Note that it goes without saying that the second parameter acquisition section 19 may always acquire the deviation as the second parameter regardless of whether or not a generation of the correlation.

Furthermore, the calculation section 21 obtains a calculated value by inputting both the first parameter and the second parameter into a predetermined multiplication formula. The predetermined multiplication formula is a formula included in an arithmetic formula having both the first parameter and the second parameter. The determination section 23 compares the calculated value P with a predetermined threshold value, and determines that the "unexpected collision" has occurred when the calculated value exceeds the threshold value.

Here, as a typical example, the calculation section 21 can obtain the calculated value by using P = Q x X as the multiplication formula when the calculated value is P, the first parameter is Q and the second parameter is X. The multiplication formula is the simplest and easy to calculate.

### Unexpected collision detection method

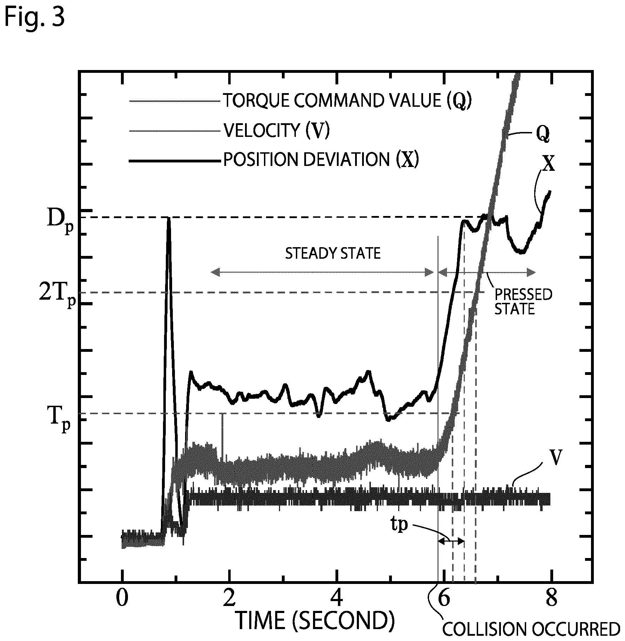

Fig. 3 is a diagram illustrating an example of a state for the change over time consisting of the torque command value Q as the first parameter, the detection velocity of motor V, and the position deviation X as the second parameter when the collision has occurred after starting a teaching work in the apparatus for taking out a molded product. The torque command value Q is the "torque command" within the feedback loop illustrated in Fig. 2.

In Fig. 3, the "steady state" means the state which the take-out head of the apparatus for taking out a molded product is moving without colliding with anything. In addition, the "pressed state" means the state that is continuing the state which the take-out head is being pressed after the take-out head has just collided with some kind of object. Further, in Fig. 3, the period of time indicating tp means the period of time being able to acquire the first parameter and the second parameter both correlations with the torque of the motor just after the collision occurs, that is, the above-mentioned "predetermined period." Note that in Fig. 3, the position deviation X which is the second parameter has no correlation with the torque after the period of time tp has elapsed, but the reason for the above-expressed state is not clear.

Even in the waveform in Fig. 3, a noise n appears in the torque command value Q. The noise n is difficult to be predicted since the noise n accidentally occurs depending on the designs of the devices or the surrounding environment. Therefore, a method or a system is attempted to detect a collision only by comparing a torque and a threshold value as in the conventional technology, the method or the system set the threshold value for the collision detection by acquiring the waveform of the torque in the design state. The threshold value would be mostly set several times (for example, twice) of a peak value Tp for the torque command waveform before the take-out head has been pressed in order to avoid a false detection from the noise n as a collision taking into account the noise n accidentally occurs. However, the above-mentioned set causes to be lower the sense of the collision detection, thereby it must be delayed to detect an unexpected collision including the case that take-out head is too much pressed. As the result, damages to the take-out head of the apparatus for taking out a molded product may be increased.

Note that a method for detecting a collision based on a position deviation X may be also considered. However, in the case that the position deviation at just beginning of acceleration operation is large as illustrating in Fig. 3, the threshold value should be set several times of the position deviation Dp of the beginning to avoid a false detection, and thereby there is a risk that the detection of an unexpected collision may be delayed compared to the detection of an unexpected collision based on the torque command value and the threshold value.

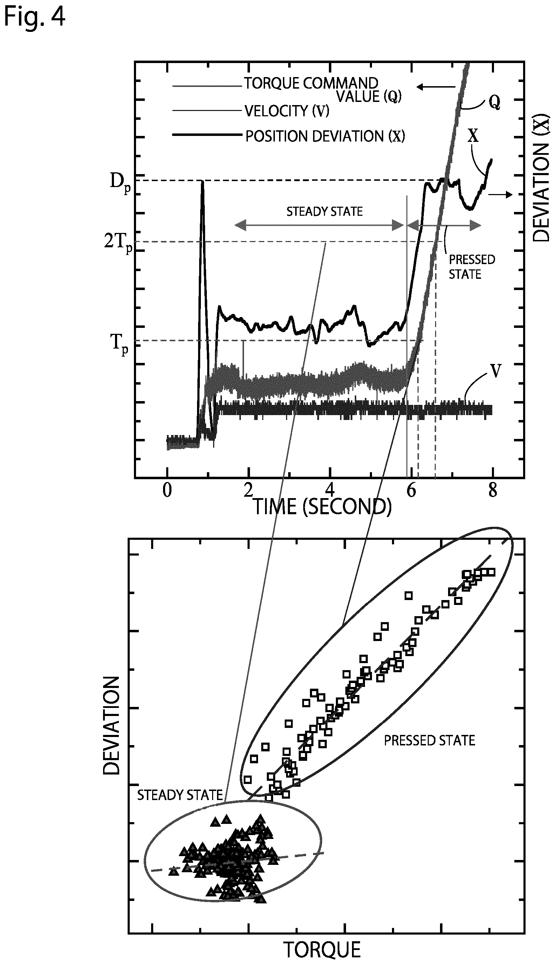

The lower diagram in Fig.4 is a correlation diagram illustrating for viewing the correlation for the changes in the waveforms between the torque command value Q and the position deviation X illustrated in Fig. 3. There is no correlation between the changes of the torque command value Q and the changes of the deviation X in a steady state as illustrated in the lower diagram in Fig. 4. However, it is clearly sure to be a positive correlation between the changes of the position deviation X and the changes of the torque command value Q in the state that the take-out head is being pressed after the collision of the take-out head.

Both the torque command value Q which is the first parameter and the position deviation X which is the second parameter have correlations with the torque of the motor within the predetermined period of time just after the collision occurs, thereby the increase / decrease trend of changes for the values when the time has passed for the first parameter and the second parameter is similar. In the predetermined period of time from when the correlation occurs until just after the "pressed state" has occurred, the product P = Q x X of the first parameter Q and the second parameter X significantly increases, and the waveform of the product P after the collision has occurred rapidly changes in a short period of time.

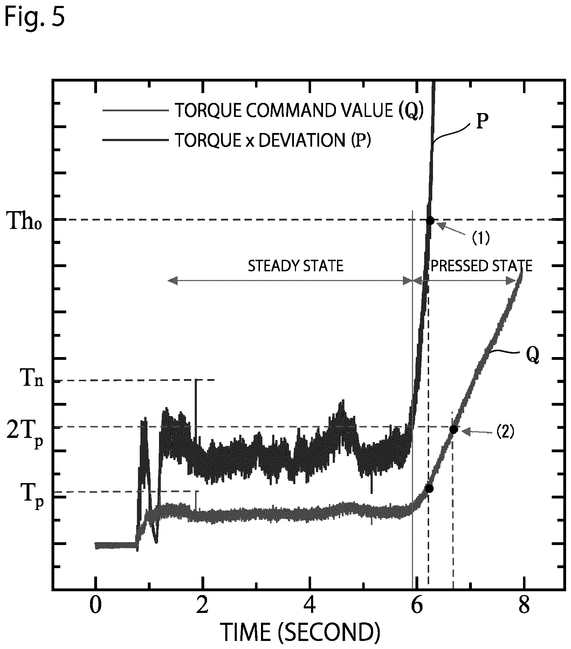

Fig. 5 illustrates the changes in the product P = Q x X and the parameter Q over time. As can be understood from Fig. 5, the noise n has no correlation with the torque of the motor, and there is no approximation in the increase / decrease trend of changes for the values, so that even if the first parameter Q and the second parameter X are multiplied, the value of the noise during calculation may not significantly increase. Therefore, according to the present embodiment, compared to conventional techniques that compare one parameter and a threshold value, it is possible to prevent false detection due to the presence of the noise.

In the embodiment, the threshold value comparing with the product P of the torque command value Q which is the first parameter and the position deviation X which is the second parameter is Th0. In the apparatus for taking out a molded product, a value larger than the calculated value that is obtained by the allowed collision in the teaching work for setting the operation process for taking out a molded product by the take-out head 3 is defined as the predetermined threshold value Th0. As mentioned above, the "unexpected collision" is a collision in case that the take-out head has collided with a mold or a peripheral object of a mold due to an incorrect operation. In Fig. 5, since the product P has increased beyond the threshold value Th0 at the timing period (1), it is determined that an unexpected collision has occurred.

Note that as illustrated in Fig. 5, in case of comparing a torque command value Q with a threshold value Tp by conventional methods, a noise n will be falsely detected so that the conventional methods have a larger threshold value. In short, in case that the threshold value is doubled to 2Tp, the torque command value Q exceeds the threshold value at the timing period (2). It would be understood that the detection timing period of an unexpected collision is longer than the detection timing period (1) in the present embodiment.

As mentioned above, the present embodiment utilizes that the product of the torque command value Q which is the first parameter and the position deviation X which is the second parameter takes a fluctuation mode which is different from a steady state and a normal pressed state starting from a collision. The concept or idea of the present invention can be applied not only to the product of the torque command value and the position deviation, but also to the case of multiplying by a multiplication formula two parameters both correlations with the torque of the motor after a collision occurs.

The method of the present invention can be also used to mechanical apparatuses other than the apparatus for taking out a molded product of the above-introduced present embodiment. The "predetermined threshold value" used in the above-mentioned case is a value that exceeds the calculated value P which is obtained not during a collision but during noise generation or acceleration / deceleration of the mechanical apparatus. Since the calculated value is different in each mechanical apparatus, the "predetermined threshold value" may be defined in each mechanical apparatus.

### INDUSTRIAL APPLICABILITY

According to the present invention, it is possible to earlier determine that an unexpected collision has occurred by comparing a calculated value with a predetermined threshold value within a predetermined period of time just after the collision occurs, the calculated value being obtained by inputting into a multiplication formula a first parameter and a second parameter both having correlations with a torque of a motor.

## Claims

1. A collision detection method for detecting an unexpected collision that is occurred when a movable portion has unexpectedly collided with a collided object in a mechanical apparatus including the movable portion supported by a support portion whose position is changed by a motor (9) as a drive source, **characterized in that** the method comprises:
a step of comparing a calculated value with a predetermined threshold value within a predetermined period of time just after a collision occurs, the calculated value being obtained by inputting into a predetermined multiplication formula a first parameter having a correlation with a torque of the motor (9) and a second parameter having a correlation with the torque of the motor (9), which is different from the first parameter, and
a step of determining that the unexpected collision has occurred when the calculated value exceeds the threshold value.

2. The collision detection method according to claim 1, wherein
at least one of the first parameter and the second parameter which have a value of 1 (one) or less, is converted to a reciprocal of the parameter and the reciprocal of the parameter is inputted into the multiplication formula to obtain the calculated value.

3. The collision detection method according to claim 1, wherein
the first parameter is a parameter related to the torque fed back to a drive unit of the motor (9), and the second parameter is a parameter related to a positioning deviation between a positioning command value given to the drive unit of the motor (9) and a detecting position obtained by detecting a position of the movable portion.

4. The collision detection method for a movable portion according to claim 1, wherein
the mechanical apparatus is an apparatus for taking out a molded product (1), the movable portion is a take-out head (3) of the apparatus for taking out a molded product (1), and the support portion is a support arm supporting the take-out head (3), and
the threshold value is a value being larger than the calculated value obtained by a collision allowed in a teaching work for setting an operation step for taking out a molded product by the take-out head (3).

5. The collision detection method according to claim 4, wherein
the multiplication formula is P = Q x X, when the calculated value is P, the first parameter is Q and the second parameter is X.

6. A collision detection system for detecting an unexpected collision that is occurred when a movable portion has unexpectedly collided with a collided object in a mechanical apparatus including the movable portion supported by a support portion whose position is changed by a motor (9) as a drive source, **characterized in that** the system comprises:
a first parameter acquisition section (17) that acquires a first parameter having a correlation with a torque of the motor (9) within a predetermined period of time just after the collision occurs,
a second parameter acquisition section (19) that acquires a second parameter having a correlation with the torque of the motor (9) and being different from the first parameter within the predetermined period of time just after the collision occurs,
a calculation section (21) that obtains a calculated value by inputting into a predetermined multiplication formula both the first parameter and the second parameter, and
a determination section (23) that compares the calculated value with a predetermined threshold value, and determines that the unexpected collision has occurred when the calculated value exceeds the threshold value.

7. The collision detection system for the movable portion according to claim 6, wherein
the mechanical apparatus is an apparatus for taking out a molded product (1), the movable portion is a take-out head (3) of the apparatus for taking out a molded product (1), and the support portion is a support arm supporting the take-out head (3), and
the threshold value is a value being larger than the calculated value obtained by a collision allowed in a teaching work for setting an operation step for taking out a molded product by the take-out head (3).
